# NEW EUROPEAN PATENT SPECIFICATION

(11) **EP 0 572 113 B2**
(45) Date of publication and mention of the opposition decision: **28.02.2007**
(45) Mention of the grant of the patent: 27.09.1995
(21) Application number: 93302920.9
(22) Date of filing: 15.04.1993
(51) Int. Cl.: C09K 8/00

(54) **Aqueous brines**
Wasserhaltige Lauge
Saumures aqueuses

(30) Priority: 29.05.1992 GB 9211384
(43) Date of publication of application: 01.12.1993
(73) Proprietor: Cabot Specialty Fluids Inc., The Woodlands, TX 77380 (US)
(72) Inventor: van Ooijen, Johannes Adrianus Cornelis, NL-4000 AB Tiel (NL)
(74) Representative: Goldbach, Klara

(56) References cited:
- EP-A- 0 137 872
- EP-A- 0 259 939
- GB-A- 2 251 876
- US-A- 4 292 183
- US-A- 4 440 649
- US-A- 4 900 457
- DATABASE WPI, Derwent Publications Ltd., London, GB; AN 92-413409; & SU-A-1 685 971
- DATABASE WPI, Derwent Publications Ltd., London, GB; AN 81-94446D; & SU-A-812 823
- "High Temperature Stabilisation of Xanthan Drilling Fluids by the use of Formate Salts" by J.D.Downs, Investigation 6DR1131 (Shell draft of D3)
- Oral disclosures by D.J. Downs at a conference in Sept. 1991, at St. Raphael, France.
- Physical Science Data 41, Handbook of Electrolytes Part A, Elsevier 1989,pp.329, 330, 774-779.
- "User's Guide to Weighted Brines" by Hudson T.E. et al, Petroleum Eng. Int.33 (1986).
- "Mutual solubility of Salts in Drill and Completion Fluids". SPE 16688 1987
- Russian Journal of Inorganic Chemistry 24(4), pages 613-618 (1979)

## Description

The present invention relates to a composition for and method of enhancing the density of aqueous brines and to well servicing fluids prepared therefrom.

It is well known that aqueous media especially those containing oil field brines, are generally used as well servicing fluids such as drilling fluids, completion fluids, packer fluids, well treating fluids, subterranean formation testing fluids, spacer fluids and hole abandonment fluids. For all these uses, such brines desirably have relatively high density. In order to achieve this, various components have been added to such fluids. Examples of such additives include heavy brines such as zinc bromide or combinations thereof with eg hydrophilic polymeric materials such as hydroxyethyl cellulose. One of the problems with such brines is that they contain halogen atoms which are not not environmentally friendly. Moreover, the polymeric hydroxyethyl celluloses are poorly hydrated, solvated or dispersed in aqueous systems which contain water-soluble salts of multivalent metals. In order to overcome the problems of toxicity it has been known to use an alkali metal salt of a carboxylic acid such as formic acid or acetic acid.

It is an object of the present invention to provide a composition which provides the desired high density aqueous brine systems which are of much lower ecotoxicity.

Accordingly, the present invention is an aqueous composition for use as a well servicing fluid as defined in the claims.

Further, the present invention relates to the use of an aqueous composition comprising in solution a mixture of the carboxylic acid salts of cesium and at least one other alkali metal the carboxylate anions in the salts being derivable from formic acid, acetic acid or propionic add, said solution having a density of greater than 1.8 g/cm³ due to the combination of said carboxylic salts, as well servicing fluid.

The surprising feature of the present invention is that the combination of salts now claimed give rise to aqueous solutions which have a higher density than when the a low density salt is used singly and that the relationship between the density of the solution and the concentration of the higher density salt is influenced by the concentrtion and nature of the low density salt.

The alkali metals forming the cations of the second salt in the composition are suitably sodium or potassium is preferably potassium.

The salts used are preferably the formates and/or acetates, most preferably the formates of cesium and potassium.

In the case where the cesium salt is a formate and the other salt is potassium formate, the relative proportions of the other salt in the composition with respect to cesium formate is suitably in the range from 5 to 55% w/w, preferably from 10 to 30% w/w. The relative proportion of the two salts would vary with the nature of the salts but the simplicity of the invention should ensure that these values can be readily established by simple experiements. An important consequence of this invention is that it enables lower concentrations of the relatively expensive cesium salts to be used in the composition to achieve the desired densities in the aqueous brines.

By varying the relative concentrations of the carboxylic acid salts in the composition it is possible to achieve the desired density of the brine or the ultimate servicing fluid in which the brine is used. Thus the densities upto 2.46 g/cm³ can be achieved using the compositions of the present invention.

The compositions of the present invention can be prepared by mixing aqueous solutions of the individual salts. Alternatively, a mixture of the aqueous solutions of the respective bases of cesium and the alkali metal can first be prepared and a carboxylic acid such as formic acid is added to the aqueous mixture of bases to form the respective formates. The desired concentration of the respective salts in the aqueous solution so formed can be adjusted by evaporation of the water from the mixed solution. The present invention is further illustrated with reference to the following Examples.

### A. Preparation of potassium formate solution:

A solution of potassium formate was formed by adding formic acid (328g. 98%) slowly from a funnel to potassium hydroxide (800g. 50%) in a vessel whilst vigorously stirring the mixture with a magnetic stirrer. Upon completion of the reaction, the solution had a pH of 8.4.

This solution was concentrated by evaporation on a water bath until crystallisation commenced. The solution was then cooled and diluted to 77.4% w/w and this formed the stock solution of potassium formate. At this concentration, the solution remained clear at room temperature (ca. 21° C). From this stock solution, diluted solutions were prepared as required by addition of demineralised water.

The densities of potassium formate solutions at varying dilutions was measured (by weighing 1 ml aliquots, in triplicate) and their behaviour upon storage at -10° C monitored. The boiling point of one of the solutions at this concentration was determined. The results obtained are tabulated in Table I below:

**Table I**

| Density of a HCOOK solution in water as a function of the concentration (T = 21 °C) | | |
|---|---|---|
| Concentration (% w/w) | Density (g/Cm³) | Boiling Point (°C) |
| 77.4 | 1.6000 | - |
| 75.0 | 1.5730 | 135 |
| 70.0 | 1.5239 | - |
| 65.0 | 1.4736 | - |

### B. Preparation of cesium formate:

A solution of cesium formate was prepared by adding formic acid (39.2 g. 98%) slowly from a funnel to cesium hydroxide (250 g, 50%) in a vessel under vigorous stirring using a magnetic stirrer. Upon completion of the reaction, the solution was diluted 10-fold and this diluted solution had a pH of 9.1.

The undiluted reaction product was used as the stock solution. The stock solution was then concentrated by evaporation. During this process, aliquots of the evaporating solution were sampled and simultaneously the temperature of the boiling solution was monitored. The samples were then cooled to room temperature and then concentration (w/w%) and densities of these sample solutions were determined. At a temperature of 135° C, crystallisation of the solution commenced and the experiment was terminated. The samples of different concentrations were stored at -3° C for one week and their respective behaviours studied. The results of this study are shown in Table II below.

**Table II**

| Density and boiling point of HCOOCs solutions in water as a function of the concn. (T = 21 °C) | | |
|---|---|---|
| Concentration (w/w%) | Density (g/cm³) | Boiling Point (°C) |
| 60.9 | 1.73 | 108 |
| 68.4 | 1.94 | 114 |
| 76.6 | 2.16 | 121 |
| 86.9 | 2.46 | 134 |

Upon storage at -3°C for one week, the solution with a concentration of 86.9% crystallised, the other solutions remained clear.

From the experiments (A) and (B) above, it can be seen that both salts are suitable for creation of fluids having a density >1.5g/cm³.

However, when fluids having a density of greater than 1.8 g/cm³ are needed, use of potassium formate alone is unsuitable. Whilst cesium formate does give rise on its own to fluids having a density above 1.8 g/cm³, cesium is an expensive material. As stated above, it has been found that by mixing twn alkali metal salts, eg cesium formate and potassium formate, fluids having a density >1.8 g/cm³ can readily and unexpectedly be achieved considering that potassium formate alone can never attain that value. This novel development is reported below.

### Example 1 :

Stock cesium formate solutions described in (B) above were mixed in different concentrations with stock solutions of potassium formate (two samples:
(a) conc. 71.9%w/w, density 1.53 and (b) conc. 78%w/w, density 1.604) described in (A) above.

At a ratio of cesium formate (82.4%w/w) : potassium formate (71.9%w/w) which correspond to a w/w ratio of 80:20 respectively, a mixed solution of the two had a density of 2.03 g/cm³. In contrast, a stock solution of cesium formate (82.4%w/w) when diluted with water alone had to use a cesium formate to water ratio of 87:13 w/w in order to achieve a solution of density 2.03 g/cm³. Thus a reduction in cesium formate consumption of 7% was achieved by replacing water with potassium formate solution as diluent.

### Example 2:

Using the methods described in (A) and (B) above, a solution of potassium formate (71.9%w/w, solution 2) and a solution of cesium formate (82.4%w/w, solution 1) were prepared.

The two solutions were mixed in different weight ratios as shown in Table III below. The densities of the resultant mixture were determined by weighing 1 ml samples on analytical scales. Each experiment and measurement were carried out in duplicate.

**Table III: Densities of mixtures of HCOOK/HCOOCs solutions in water, as function of HCOOCs**

| Solution | Final conc of HCOOCs (w/w%) | Density (Kg/dm³) Experiment1 | Density (Kg/dm³) Experiment2 |
|---|---|---|---|
| Cs-formate soln(82.4%) | - | 2.30 | - |
| Soln1:2 w/w | | | |
| 90:10 | 74.2 | 2.13 | 2.16 |
| 80:20 | 65.9 | 2.03 | 2.05 |
| 70:30 | 57.2 | 1.93 | 1.95 |
| 60:40 | 49.4 | 1.86 | - |
| 50:50 | 41.2 | 1.79 | - |
| K-formate soln 71.9% | | 1.53 | - |

| | | | |
|---|---|---|---|
| "-" corresponds to 'not determined' | | | |

### Example 3:

Aliquots of a cesium formate solution (82.4% w/w, solution 3) and a potassium formate solution (78.0% w/w, solution 4) prepared as in (A) and (B) above, were mixed in the volumetric ratios shown in Table IV below. The densities of these mixture were determined and the results achieved are also tabulated in Table IV below:

**Table IV: Densities of potassium/cesium formate mixed solutions in water.**

| Solution | Final conc Cs-formate (w/w%) | Density (Kg/dm³) |
|---|---|---|
| Cs-formate soln (82.4%) | 82.4 | 2.29 |
| Solution 3:4 (v/v) | | |
| 95:5 | | 2.25 |
| 90:10 | | 2.22 |
| 87:13 | 72.3 | 2.20 |
| 80:20 | | 2.17 |
| 77:23 | 74.2 | 2.13 |
| 71:29 | 64.5 | 2.11 |
| 62.5:37.5 | 58.2 | 2.05 |
| 55.5:44.5 | 53.0 | 2.00 |
| 50:50 | 48.9 | 1.96 |
| K-formate soln (78.0%) | | 1.604 |

The above results show that a fluid of density of about 2.0 can be prepared at a substantially reduced cesium concentration by mixing a cesium formate solution (82.4% w/w) with a potassium formate solution. Further results below show that the above concept applies equally well for other initial cesium formate concentrations.

### Example 4:

In order to further optimize the composition of the mixed cesium formate/potassium formate solutions to achieve fluids of a density in the range of 2.0 +/- 0.1 g/cm³, and to show that in these cases also the amount of cesium used can be reduced substantially, the followng series of experiments were undertaken. In these, cesium formate solutions of a range of concentrations from 74 to 82% w/w (solution 5) were mixed with potassium formate solutions (79% w/w, solution 6) in different ratios. The densities of the resultant mixtures were determined in duplicate.

**Table V**

| Densities of mixed solutions of potassium/cesium formates | | | | |
|---|---|---|---|---|
| Initial conc of HCOOCs wt% | Ratio of Soln 5:6 wt% | Final conc of HCOOCs wt% | Density (g/cm³) | |
| 82 | 85:15 | 69.7 | 2.06 | 2.07 |
| 80 | 80:20 | 64.0 | 2.00 | 2.00 |
| 80 | 85:15 | 68.0 | 2.06 | 2.04 |
| 80 | 90:10 | 72.0 | 2.12 | 2.10 |
| 78 | 75:25 | 58.5 | 1.92 | 1.91 |
| 78 | 80:20 | 62.4 | 1.99 | 1.97 |
| 78 | 85:15 | 66.3 | 2.00 | 2.01 |
| 78 | 90:10 | 70.2 | 2.07 | 2.05 |
| 78 | 95:5 | 74.1 | 2.08 | 2.08 |
| 76 | 80:20 | 60.8 | 1.92 | 1.90 |
| 76 | 85:15 | 64.6 | 1.97 | 1.95 |
| 76 | 90:10 | 68.4 | 2.00 | 1.98 |
| 74 | 85:15 | 62.9 | 1.93 | 1.91 |

The above results show that use of mixed alkali metal salts of carboxylic acids enables minimisation of expensive alkali metals in such formulations without loss of the ability to enhance densities of aqueous systems containing the same. Clearly, this ability can be used to good effect in formulating servicing fluids in the drilling industry.

## Claims

1. An aqueous composition for use as well servicing fluid comprising In solution a mixture of the carboxylic acid salts of cesium and at least one other alkali metal, the carboxylate anions in the salts being derivable from formic acid, acetic acid or propionic acid, said solution having a density of greater than 1.8 *g*/*cm³* due to the combination of said carboxylic salts,
with the proviso that mixtures consisting of lithium formate, cesium formate and water are excluded.

2. A composition according to claim 1, wherein the alkali metal salt is that of sodium or potassium.

3. A composition according to claim 1 or 2, wherein the carboxylate anion is a formate.

4. A composition according to any one of the preceding claims, wherein said composition is prepared either by
(iii) mixing aqueous solutions of the individual salts, or
(iv) mixing aqueous solutions of the respective bases of cesium and the alkali metal and adding a carboxylic acid to the aqueous mixture of the bases.

5. Use of an aqueous composition comprising in solution a mixture of the carboxylic acid salts of cesium and at least one other alkali metal, the carboxylate anions in the salts being derivable from formic acid, acetic acid or propionic acid, said solution having a density of greater than 1.8 g/cm³ due to the combination of said carboxylic salts, as well servicing fluid.

## Patentansprüche

1. Wässerige Zusammensetzung für die Verwendung als Bohrflüssigkeit, enthaltend in Lösung eine Mischung der Carbonsäuresalze von Cäsium und zumindest einem anderen Alkalimetall, wobei die Carboxylatanionen in den Salzen sich von Ameisensäure, Essigsäure oder Propionsäure herleiten, wobei die Lösung eine Dichte von mehr als 1,8 g/cm³ aufgrund der Kombination der Carbonsäuresalze aufweist, mit der Maßgabe, dass Mischungen, die aus Lithiumformiat, Cäsiumformiat und Wasser bestehen, ausgeschlossen sind.

2. Zusammensetzung nach Anspruch 1, worin das Alkalimetallsalz Natrium- oder Kaliumsalz ist.

3. Zusammensetzung nach einem der Ansprüche 1 oder 2, worin das Carboxylatanion ein Formiat ist.

4. Zusammensetzung nach irgendeinem der vorhergehenden Ansprüche, worin die Zusammensetzung entweder durch
(i) Mischen von wässerigen Lösungen der einzelnen Salze, oder
(ii) Mischen von wässerigen Lösungen der entsprechenden Basen von Cäsium und dem Alkalimetall und Zugabe einer Carbonsäure zu der wässerigen Mischung der Basen,
hergestellt wird.

5. Verwendung einer wässerigen Zusammensetzung, enthaltend in Lösung eine Mischung der Carbonsäuresalze von Cäsium und zumindest einem anderen Alkalimetall, wobei die Carboxylatanionen in den Salzen sich von Ameisensäure, Essigsäure oder Propionsäure herleiten, wobei die Lösung eine Dichte von mehr als 1,8 g/cm³ aufgrund der Kombination der Carbonsäuresalze aufweist, als Bohrflüssigkeit.

## Revendications

1. Composition aqueuse pour une utilisation en tant que fluide d'entretien de puits comprenant en solution un mélange des sels d'acide carboxylique de césium et d'au moins un autre métal alcalin, les anions carboxylates dans les sels pouvant être obtenus à partir de l'acide formique, de l'acide acétique ou de l'acide propionique, ladite solution ayant une masse volumique supérieure à 1,8 g/cm³ due à la combinaison desdits sels carboxyliques, pourvu que les mélanges consistant en formiate de lithium, formiate de césium et eau soient exclus.

2. Composition selon la revendication 1, dans laquelle le sel de métal alcalin est celui de sodium ou de potassium.

3. Composition selon la revendication 1 ou 2, dans laquelle l'anion carboxylate est un formiate.

4. Composition selon l'une quelconque des revendications précédentes, dans laquelle ladite composition est préparée soit:
(i) en mélangeant des solutions aqueuses des sels individuels, soit
(ii) en mélangeant des solutions aqueuses des bases respectives du césium et du métal alcalin et en ajoutant un acide carboxylique au mélange aqueux des bases.

5. Utilisation d'une composition aqueuse comprenant en solution un mélange de sels d'acide carboxylique du césium et d'au moins un autre métal alcalin, les anions carboxylates dans les sels pouvant être obtenus à partir de l'acide formique, de l'acide acétique ou de l'acide propionique, ladite solution ayant une masse volumique supérieure à 1,8 g/cm³ due à la combinaison desdits sels carboxyliques, en tant que fluide d'entretien de puits.
